# EUROPEAN PATENT APPLICATION

(11) **EP 4 718 587 A1**
(43) Date of publication of application: **01.04.2026**
(21) Application number: 25194560.6
(22) Date of filing: 07.08.2025
(51) Int. Cl.: H01M 10/6557, H01M 10/6567, H01M 10/617, H01M 10/647, H01M 50/291, H01M 50/209

(54) **ELECTRIC BATTERY PACK WITH AN IMMERSION THERMAL REGULATION SYSTEM INCLUDING AN IMPROVED SEALING DEVICE**

(30) Priority: 27.09.2024 IT 202400021546
(71) Applicant: C.R.F. Società Consortile per Azioni, 10043 Orbassano (Torino) (IT)
(72) Inventor: RICCO, Raffaele, I-10043 Orbassano (Torino) (IT); VURRO, Luca, I-10043 Orbassano (Torino) (IT)
(74) Representative: Buzzi, Notaro & Antonielli d'Oulx S.p.A.

(57) **Abstract**

An electric battery pack comprises one or more electric battery units (1), each including an array of battery cells (2) arranged inside a container (4) and kept spaced apart from each other by respective spacer frames (8). A temperature-regulating liquid distribution system includes an inlet collector chamber (5) disposed below the array of battery cells (2) and an outlet collector chamber (6) disposed above the array of battery cells (2) and communicating with the inlet collector chamber (5) through the spaces (7) defined between the battery cells (2). Each space (7) between the cells (2) communicates with the inlet collector chamber (5) via one or more relatively narrow passages (9). The cells (2) each have a positive pole (3P) and a negative pole (3N) on a vertical end wall of the cell, facing a vertical side wall (40) of the container (4). The positive poles (3P) and negative poles (3N) of the cells are contained in one or more lateral chambers (CP, CN) of the battery unit (1), which are isolated from the space of the container occupied by the cells (2) by a separation wall (D) including a sealing panel (10) made of elastomeric material, for example silicone material, mounted on the ends of the cells (2) bearing the positive poles (3P) and negative poles (3N), and a rigid support frame (11) for the sealing panel (10), rigidly connected to the container (4). One or more rigid tubular elements (12) are associated with the sealing panel (10) for communication between the inlet collector chamber (5) and the lateral chambers (CP, CN).

## Description

### Field of the invention

The present invention relates to the field of electric batteries, particularly to electric batteries for powering traction electric motors in electric or hybrid vehicles.

More specifically, the invention relates to battery packs of the type wherein battery cells are in direct contact with a flow of a temperature-regulating liquid, typically a dielectric oil, which flows through the battery pack to maintain the battery cells within a predetermined temperature range, thereby ensuring correct and safe operation of the battery pack under all operational and environmental conditions.

### Background of the invention

The Applicant has previously proposed various solutions in the field of thermal regulation systems for electric battery packs. See, for example, the Italian patent applications 102023000022692, 102023000022698, 102023000022704, 102023000025884, 102024000002776, 102024000002779, 102024000004423, 102024000007807, 102024000007813, 102024000007816, 102024000007828, 102024000013039, 102024000013492, 102024000014308, 102024000014314, 102024000014326, 102024000015637, 102024000016354, 102024000016933, all still not publicly available at the priority date of the present invention.

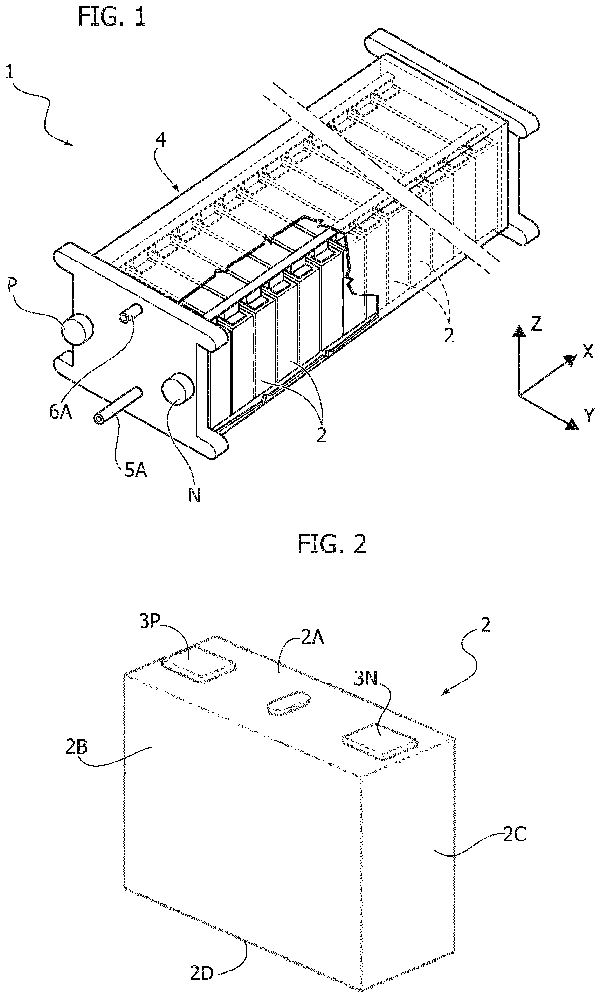

Figure 1 of the attached drawings shows an example of a battery module 1 of a known type, to which the present invention is applicable. The battery module 1 comprises an aligned array of prismatic battery cells 2 as illustrated in Figure 2. This type of battery cell includes a casing with an upper wall 2A, from which the positive and negative poles or "tabs" 3P and 3N of the cell 2 protrude, two main walls 2B (only one of which is visible in Figure 2), two end walls 2C (only one of which is visible in Figure 2), and a lower wall 2D.

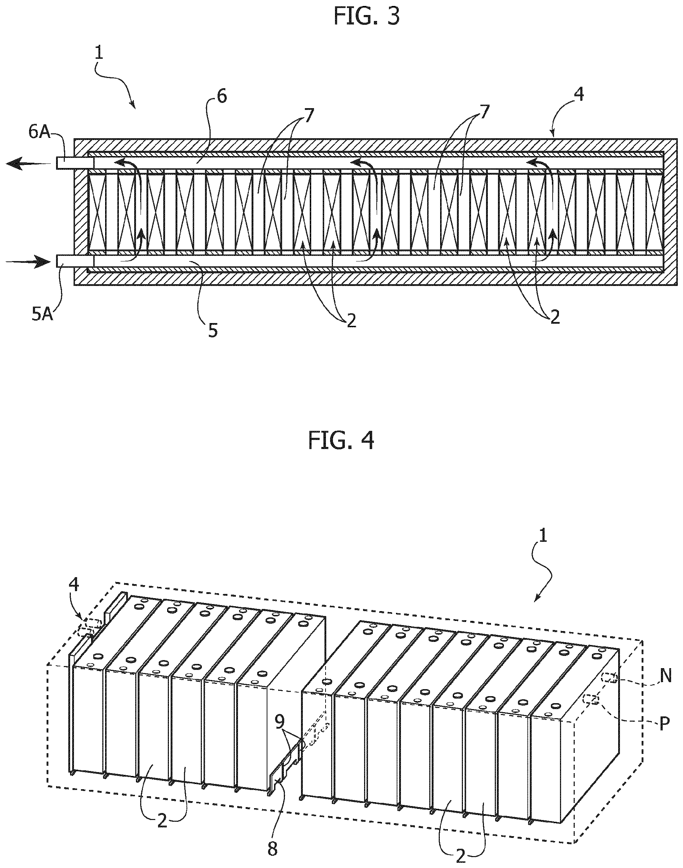

In battery modules of the type described above, the battery cells 2 are arranged within a sealed container 4 and are immersed in a flow of a dielectric temperature-regulating liquid, such as an oil. The container 4 defines internally an inlet collector chamber 5 (schematically illustrated in Figure 3) located below the cells 2, and an outlet collector chamber 6 (also schematically illustrated in Figure 3) located above the cells 2. The container 4 has an inlet 5A and an outlet 6A for the temperature-regulating liquid, communicating respectively with the inlet collector chamber 5 and the outlet collector chamber 6. P and N indicate the positive and negative poles of the battery module 1.

Generally, the inlet 5A is always positioned below the cells 2, while the outlet 6A is positioned above the cells 2, to allow any air bubbles formed within the liquid to be collected in the upper collector chamber. However, this layout is not the only possible one; the inlet and outlet can be reversed when an inlet pressure can be guaranteed to prevent any form of liquid evaporation.

Battery modules of the type illustrated in Figure 1 are used to construct battery packs intended to power traction electric motors in electric or hybrid vehicles. In operation, the temperature-regulating liquid enters the inlet collector chamber 5, located below the battery cells 2, and reaches the outlet collector chamber 6, located above the battery cells 2, passing through a plurality of passages 7 provided between the battery cells 2. In Figure 3, the dimensions of the passages 7 between the battery cells 2 have been exaggerated for clarity.

In general, it is of fundamental importance to ensure that during the operation of the electric vehicle, the battery cells always remain within a predetermined temperature range, typically between a minimum threshold of 20°C and a maximum threshold of 55°C. The battery cells used in electric vehicles are typically lithium-ion battery cells, which tend to generate heat due to the chemical reaction occurring within the cells during operation, as well as due to the Joule effect caused by current flow within the battery. The term "battery operation" here refers to both the charging process and the discharging process, which typically occurs during vehicle operation. It must be considered that the most critical operating conditions for the battery are those related to fast charging, i.e., charging the battery in less than one hour.

During normal operating conditions of the battery pack, the temperature-regulating liquid must perform a cooling action to counteract the temperature increase caused by the heat generated in the cells for the reasons mentioned above. To this end, the thermal regulation system includes an external circuit (not shown in Figure 1) comprising one or more heat exchangers configured to cool the hot liquid from the outlet 6A before it is fed back, via a pump (not shown), to the inlet 5A. However, under extreme operating conditions, particularly in cold climates, the temperature-regulating liquid must perform a heating function. For this purpose, the external circuit may include a heating exchanger and/or an electric resistance heating device.

With reference to the configuration illustrated as an example in Figure 3, experiences with batteries of this type show that the temperature within the battery module varies significantly both from cell to cell, as the cells 2 farther from the temperature-regulating liquid inlet 5A are subjected to less cooling, and within each cell, where the temperature distribution tends to be higher where current lines are denser, such as near the poles.

Numerous studies have demonstrated that:
- to reduce the aging process of a single battery cell, it is advisable to limit the internal temperature gradient within the cell to 5°C;
- to avoid a "thermal runaway" phenomenon, which is destructive to the battery, it is necessary to keep the maximum temperature of each individual cell below 55°C.

It is therefore desirable not only to maintain the battery cell temperature within a predetermined range but also to strive for the most uniform temperature distribution possible among the different battery cells and within each individual cell.

To address this issue, solutions of the type schematically illustrated in Figure 4 have already been proposed. This figure is a perspective view of a group of battery cells, with one cell removed to show an element 8 forming part of a spacer frame disposed between adjacent cells. In solutions of this type, each spacer element 8 includes one or more relatively narrow passages (indicated by 9 in Figure 4) that connect the space between adjacent cells with the inlet collector chamber 5. The narrow passages 9 are configured and sized to provide sufficient resistance to the flow of the temperature-regulating liquid to prevent the liquid from flowing more heavily in the spaces between cells closer to the inlet opening 5A and/or the outlet opening 6A. This ensures that the flow rate of the temperature-regulating liquid through the different inter-cell spaces is substantially uniform. Additionally, as shown in Figure 4, each spacer element 8 includes a plurality of narrow passages distributed along the width of the cells, which also helps to uniformize the thermal regulation effect between the center and the sides of each individual cell.

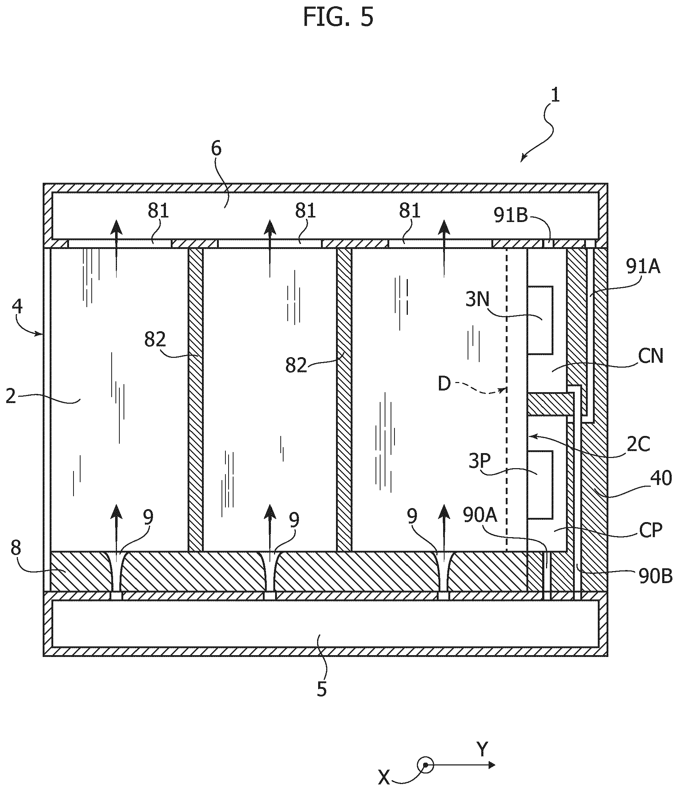

In developing solutions of this type, the Applicant has already proposed a solution of the type illustrated in Figure 5, which shows a cross-sectional view of the battery unit in a plane orthogonal to the X direction of Figure 1, along which the battery cells 2 are arranged side by side.

The solution in Figure 5 refers to a case where the battery cells 2 are horizontally positioned so that the positive and negative poles 3P, 3N are on a vertical end wall of the cell, facing a vertical side wall 40 of the container 4 that is parallel to the X direction.

In Figure 5, the parts common to those illustrated in Figures 1-4 are indicated with the same references. Similarly to the solution described above, in the case of the solution of Figure 5 as well, the battery cells 2 are kept spaced apart from each other by a spacer frame comprising a lower frame portion 8, in which the restricted passages 9 are formed for communication between the inlet collector chamber 5 and the spaces 7 between the cells 2. In the illustrated example, each spacer frame also includes two vertical strips 82, spaced apart from each other. The structure of the container 4 further includes apertures 81 for communication between the spaces defined between the cells 2 by the spacer frames and the outlet collector chamber 6.

In the solution of Figure 5, moreover, to promote effective thermal regulation of the poles 3P, 3N of all cells 2, all the poles of the different cells are contained within respective chambers CP and CN, defined within the container 4. The chambers CP, CN are isolated from each other and are also isolated from the spaces 7 between the cells 2 by means of a spacer wall D.

The chamber CP communicates with the inlet collector chamber 5 via a passage 90A and communicates with the outlet collector chamber 6 via a passage 91A. The chamber CN, containing the negative poles 3N, communicates with the inlet collector chamber 5 via a passage 90B and with the outlet collector chamber 6 via a passage 91A.

Preferably, the passages 90A, 90B include relatively narrow sections, configured to prevent the temperature-regulating liquid from tending to flow to a greater extent through the chambers CP, CN rather than through the spaces defined between the different cells.

The solution illustrated in Figure 5 was proposed by the Applicant in Italian patent application No. 10 2023 000025884, which is still confidential at the priority date of the present invention.

In further developing this solution, the Applicant recognized the need for additional improvements, particularly with regard to the implementation of the wall D that separates the chambers CP, CN, containing the cell poles, from the spaces 7 between the cells.

This problem is not easily solvable, as it is necessary, on one hand, to achieve effective sealing, and on the other hand, to ensure that the sealing effectiveness remains unaltered even following "swelling" or "breathing" phenomena, to which the battery cells are subjected during normal battery operation, due to gases produced inside the cell casing as a result of the chemical reaction during battery charging and discharging operations. Finally, it is also necessary to ensure that the flow through the spaces between the cells and through the chambers containing the cell poles is always strictly uniform and controlled, even in the case of deformations of the cell walls due to the aforementioned phenomena.

### Object of the invention

It is therefore an object of the present invention to provide a battery pack of the type indicated at the beginning of the present description, equipped with a highly efficient thermal regulation system, with particular regard to the most critical areas constituted by the poles of the battery cells.

A further object of the invention is to provide a battery pack of the aforementioned type, in which the thermal regulation system is capable of ensuring, under all operating conditions, substantial uniformity of the thermal regulation action on the different cells and, for each cell, substantial uniformity of the thermal regulation action among the different zones of the cells, including the zone of the cell poles.

A further object of the invention is to provide a battery pack of the aforementioned type, in which the high efficiency and reliability of the thermal regulation system remains unaltered throughout the entire life cycle of the battery, despite the deformations to which the casings of the battery cells are subjected during their normal operation.

Finally, a further object of the invention is to achieve all the aforementioned objectives with extremely simple and low-cost means.

### Summary of the invention

With a view to achieving one or more of the aforementioned objects, the invention relates to an electric battery pack, comprising one or more electric battery units, wherein each battery unit comprises an array of battery cells arranged inside a container, wherein the battery cells are arranged side by side along a horizontal direction and kept spaced apart from each other by respective spacer frames,
wherein the container is configured to be traversed by a flow of a temperature-regulating liquid that comes into direct contact with the battery cells to keep them within a predetermined temperature range,
wherein the battery unit comprises a temperature-regulating liquid distribution system, including:
   an inlet opening for the temperature-regulating liquid, communicating with an inlet collector chamber, disposed below the array of battery cells,
   an outlet opening for the temperature-regulating liquid, communicating with an outlet collector chamber, disposed above the array of battery cells,
   wherein the inlet collector chamber and the outlet collector chamber communicate with each other through the spaces defined between the battery cells by said spacer frames,
   wherein each of said spaces defined between the battery cells communicates with the inlet collector chamber, located below the battery cells, via one or more relatively narrow passages, configured to oppose sufficient resistance to the flow of the temperature-regulating liquid to prevent a tendency of the temperature-regulating liquid to flow to a greater extent through the spaces between the battery cells that are closer to said inlet opening and/or said outlet opening,
   wherein the cells each have a positive pole and a negative pole that are disposed on a vertical end wall of the cell, which faces a vertical side wall of the container, parallel to said direction along which the cells are arranged side by side,
   wherein all the positive poles and all the negative poles of the cells are contained in one or more lateral chambers of the battery unit, which are isolated from the spaces between cells,
   wherein said one or more lateral chambers containing the positive poles and/or negative poles of the cells communicate with the inlet collector chamber and with the outlet collector chamber, so that the temperature-regulating liquid can flow from said inlet collector chamber to said outlet collector chamber also passing through said one or more lateral chambers,
   wherein said one or more lateral chambers containing the positive poles and negative poles of the cells are isolated from the spaces between the cells by a separation wall comprising:
      a sealing panel made of elastomeric material, mounted on the ends of the cells bearing the positive and negative poles,
      a rigid support frame for the sealing panel, rigidly connected to the battery pack container and engaged on the ends of the cells bearing the positive and negative poles, and
      wherein one or more rigid tubular elements are embedded in the sealing panel for communication between the inlet collector chamber and said one or more lateral chambers.

Thanks to the aforementioned features, the battery pack according to the invention ensures perfect sealed separation between the chambers containing the positive and negative poles of the cells and the spaces between the cells. The rigid support frame of the sealing panel ensures reliable mounting of the sealing panel, while the latter adapts, thanks to its flexibility, to the movements that the cell walls may undergo during battery operation, thus ensuring perfect sealing under all conditions. At the same time, the flow of the temperature-regulating liquid from the inlet collector chamber to the aforementioned chambers containing the positive and negative poles of the cells is rigorously controlled throughout the entire life cycle of the battery, since the communication is defined by one or more rigid tubular elements, for example made of metal, embedded in the material of the sealing panel.

In a preferred embodiment, the support frame of the sealing panel has a rack-like configuration, so as to engage around the ends of the battery cells bearing the positive and negative poles. In this embodiment, said support frame further includes a plurality of spacer pins that are connected to the vertical side wall of the container facing the cell poles.

The sealing panel is made of an electrically non-conductive elastomeric material, for example a silicone material, also having high-temperature resistance properties.

The support frame of the sealing panel may be, for example, made of plastic material, such as PTFE. The support frame of the sealing panel is preferably rigidly connected to the battery pack container.

A fundamental aspect of the invention is the inclusion of one or more rigid tubular elements, for example made of metallic material, within the sealing panel and/or within the support frame, which ensures constant and rigorous control of the flow rate of the temperature-regulating liquid flowing from the inlet collector chamber of the battery pack to the chambers containing the poles of the battery cells. In this way, uniformity of the temperature-regulating liquid flow can be guaranteed both through the different spaces between the cells and through the chambers containing the cell poles.

The sealing panel, thanks to its elastic deformability, is capable of adapting to deformations of the cell walls due to "swelling" or "breathing" phenomena during operation. This aspect is crucial for maintaining system integrity throughout the entire battery life cycle.

Another significant advantage lies in the fact that, thanks to the use of a support frame for the sealing panel, it prevents the sealing panel from being extruded through the spaces between the cells, even when subjected to pressure gradients in the temperature-regulating liquid.

In summary, the invention provides a robust and reliable solution that ensures sealing and efficient thermal regulation of the battery cells, while maintaining high compatibility with structural deformations that may occur during operation.

### Detailed Description of the Invention

Further features and advantages of the invention will emerge from the following description with reference to the attached drawings, provided purely by way of non-limiting example, wherein:
Figures 1-5 illustrate solutions previously studied and proposed by the Applicant, as already described above,
Figure 6 is a schematic cross-sectional view, in a horizontal plane, of a battery unit implemented in accordance with the solution illustrated in Figure 5,
Figure 7 is a perspective view of some of the cells of the battery unit of Figure 6, with the sealing panel support frame mounted thereon,
Figure 7A is a perspective view of the sealing panel,
Figure 8 is a further partial perspective view of the sealing panel support frame, and
Figures 9, 10 are a perspective view and a cross-sectional view, showing a detail of the support frame and the sealing panel wherein a tubular element is provided for communication between the inlet collector chamber of the battery unit and the chambers containing the poles of the battery cells.
Figures 1-5 have already been described above.

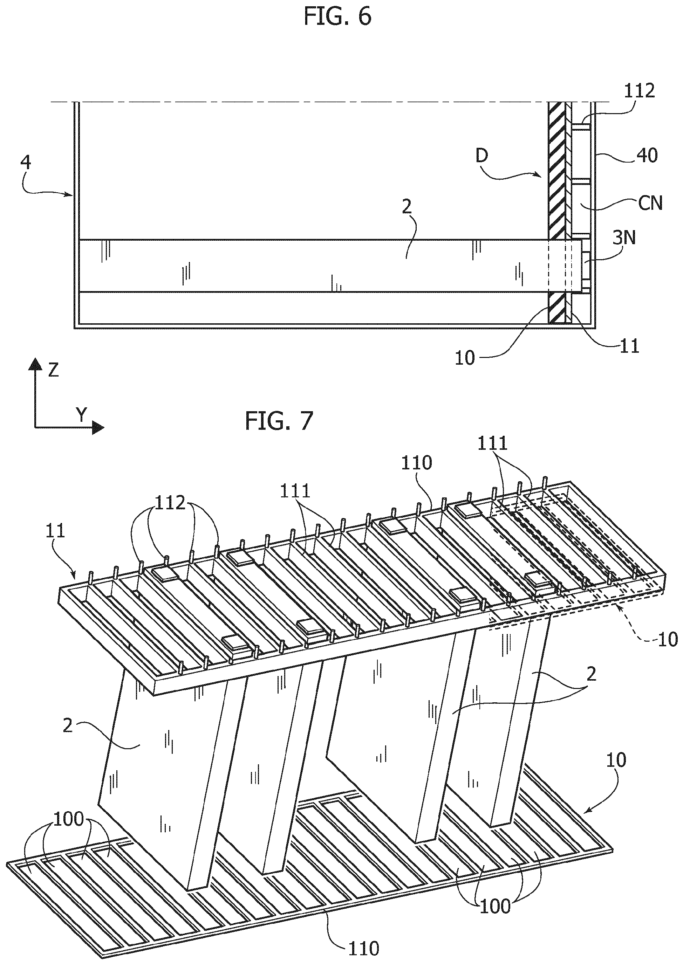

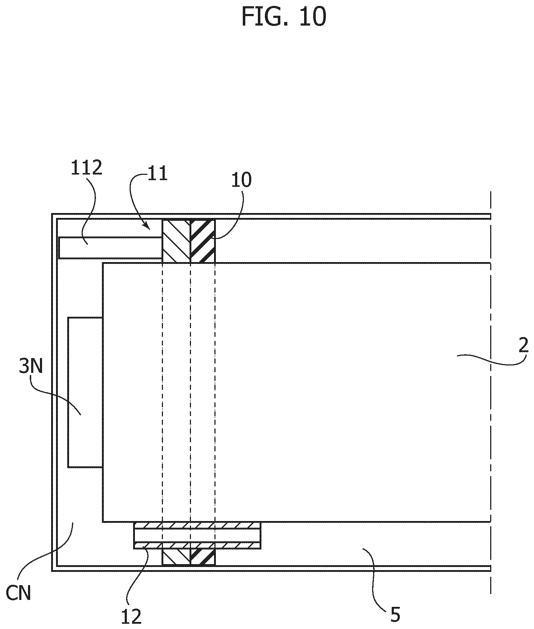

In Figures 6-10, the parts common to those of Figures 1-5 are indicated with the same references.

The present invention relates to a solution of the type already described above with reference to Figure 5, namely a battery unit, wherein the battery cells 2 are arranged horizontally, with vertical end walls bearing the positive poles 3P and negative poles 3N of the cells, facing a vertical side wall 40 of the casing 4 that extends parallel to the longitudinal direction X (Figure 1) along which the cells 2 are arranged side by side.

The present invention relates, in particular, to the structure and configuration of the wall D, used to isolate the chambers containing the poles 3P, 3N from the space inside the container that is occupied by the cells 2.

It should be noted that, while Figure 5 shows a solution wherein the positive poles 3P and negative poles 3N are contained in two separate chambers CP and CN, the invention is also applicable to the case wherein positive and negative poles 3P, 3N are contained in a single chamber that communicates both with the inlet collector chamber 5 and with the outlet collector chamber 6 and is isolated from the spaces between the cells.

Figure 6 illustrates a solution of this type, in a cross-sectional and plan view, wherein a single battery cell 2 is shown inside the container 4. The battery cell 2 has positive and negative poles (in Figure 6 only the negative pole 3N is visible) on a vertical end wall thereof facing the side wall 40 of the casing 4, which extends parallel to the X direction.

According to the invention, the wall D that isolates the chamber containing the positive and negative poles (indicated as CN in Figure 6) from the space occupied by the cells 2 has a composite structure, including a sealing panel 10, preferably made of elastomeric material, for example a silicone material suitable for withstanding high temperatures, and a support frame 11, which is rigidly connected to the casing 4 and supports the sealing panel 10.

Figure 7 shows a preferred embodiment wherein the support frame 11 has a rack-like configuration, including two parallel and spaced longitudinal strips 110, joined together by a plurality of cross members 111. The frame 11 is configured and dimensioned such that the end of each cell 2 can be received in a respective space delimited between the strips 110 and two cross members 111. In this way, the cross members 111 also serve as spacers between one cell and another.

The elastomeric material panel 10, serving as a seal, is fundamentally a rectangular panel with a plurality of apertures 100 (Figure 7A), configured and dimensioned to allow the panel 10 to be fitted over the ends of the cells 2, thus acting as a sealing gasket.

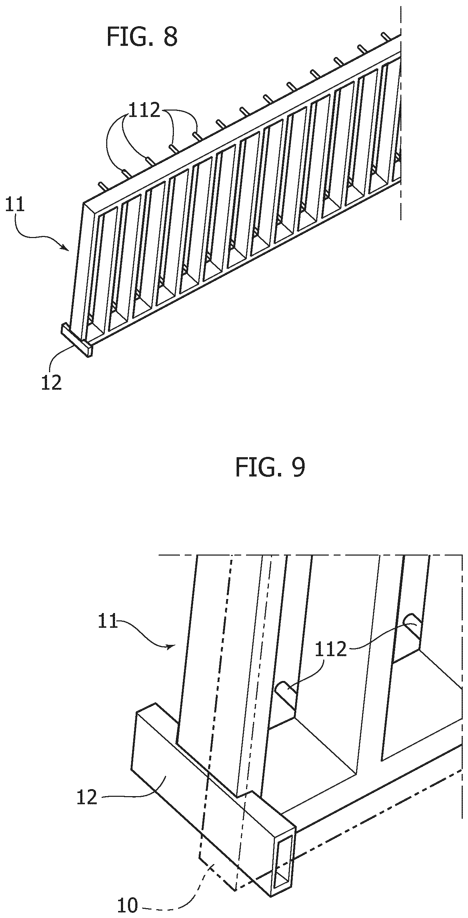

According to a further feature, as better illustrated in Figure 8, the support frame 11 further includes a plurality of pins 112, which are connected to the side wall 40 of the casing 4 and ensure that the frame 11 is rigidly maintained in position by the side wall 40 of the container 4.

As already indicated, one or more rigid tubular elements 12, for example made of metallic material, are incorporated (e.g., embedded by molding) in the structure of the support frame 11 and/or the sealing panel 10, ensuring communication between the inlet collector chamber 5 and the chamber CN through a relatively narrow passage of strictly determined size.

As is evident from the preceding description, the battery pack according to the invention ensures effective control of the temperature-regulating liquid flow, both through the spaces between the cells 2 of the battery unit and through one or more chambers containing the positive and negative poles of the cells, which represent critical elements subject to overheating. This is achieved by providing a sealing panel 10 capable of ensuring effective sealing under all operating conditions, adapting to deformations that the battery cell walls may undergo during operation. At the same time, the sealing panel is maintained in position by a support frame 11 anchored to the battery pack container, ensuring that the sealing panel cannot undergo undesired deformations due to overpressures that may occur in the temperature-regulating liquid flow. Finally, communication between the inlet collector chamber and the chamber, or chambers, containing the positive and negative poles of the cells is ensured through passages of strictly controlled cross-section, defined by rigid tubular elements, preferably metallic, associated with said sealing panel and/or said support frame.

Naturally, without departing from the principle of the invention, the construction details and embodiments may vary widely with respect to what has been described and illustrated purely by way of example, without thereby departing from the scope of the present invention, as defined in the appended claims.

## Claims

1. Electric battery pack, comprising one or more electric battery units, wherein each battery unit comprises an array of battery cells (2), arranged inside a container (4), wherein the battery cells (2) are arranged side by side along a horizontal direction (X) and kept spaced apart from each other by respective spacer frames (8),
wherein the container (4) is configured to be traversed by a flow of a temperature-regulating liquid that is intended to come into direct contact with the battery cells (2) to keep them within a predetermined temperature range,
wherein each battery unit (1) comprises a temperature-regulating liquid distribution system, including:
an inlet opening (5A) for the temperature-regulating liquid, communicating with an inlet collector chamber (5), disposed below the array of battery cells (2),
an outlet opening (6A) for the temperature-regulating liquid, communicating with an outlet collector chamber (6) disposed above the array of battery cells (2),
wherein the inlet collector chamber (5) and the outlet collector chamber (6) communicate with each other through the spaces (7) defined between the battery cells (2) by said spacer frames (8),
wherein each of said spaces (7), defined between the battery cells (2), communicates with the inlet collector chamber (5), located below the battery cells (2), via one or more relatively narrow passages (9), configured to oppose sufficient resistance to the flow of the temperature-regulating liquid to prevent a tendency of the temperature-regulating liquid to flow to a greater extent through the spaces (7) between the battery cells (2) that are closer to said inlet opening (5A) and/or said outlet opening (6A),
wherein the cells (2) each have a positive pole (3P) and a negative pole (3N), which are disposed on a vertical end wall of the cell, facing a vertical side wall (40) of the container (4), parallel to said direction (X) along which the cells (2) are arranged side by side,
wherein all the positive poles (3P) and all the negative poles (3N) of the cells are contained in one or more lateral chambers (CP, CN) of the battery unit (1), which are isolated from the spaces (7) between the cells (2),
wherein said one or more lateral chambers (CP, CN) containing the positive poles (3P) and/or negative poles (3N) of the cells (2) communicate with the inlet collector chamber (5) and with the outlet collector chamber (6), so that the temperature-regulating liquid can flow from said inlet collector chamber (5) to said outlet collector chamber (6) also passing through said one or more lateral chambers (CP, CN),
wherein said one or more lateral chambers (CP, CN) containing the positive poles (3P) and negative poles (3N) of the cells are isolated from the spaces (7) between the cells (2) by a separation wall (D) including:
a sealing panel (10) made of elastomeric material, preferably silicone material, mounted on the ends of the cells (2) bearing the positive poles (3P) and negative poles (3N),
a rigid support frame (11) for the sealing panel (10), rigidly connected to the container (4) and engaged on the ends of the cells (2) bearing the positive poles (3P) and negative poles (3N), and
wherein one or more rigid tubular elements (12) are associated with the sealing panel (10) and/or the rigid support frame (11) for communication between the inlet collector chamber (5) and said one or more lateral chambers (CP, CN).

2. Battery pack according to claim 1, **characterized in that** said support frame (11) has a rack-like configuration, with two parallel and spaced longitudinal strips (110), joined together by a plurality of cross members (111) that serve as spacer elements between the cells (2).

3. Battery pack according to claim 1, **characterized in that** the support frame (11) includes a plurality of spacer pins (112) connected to said vertical side wall (40) of the container (4).

4. Battery pack according to claim 1, **characterized in that** said rigid tubular elements (12) define relatively narrow passages, configured to oppose sufficient resistance to the flow of the temperature-regulating liquid to prevent the temperature-regulating liquid from tending to flow to a greater extent through said one or more lateral chambers (CP, CN) rather than through the spaces (7) between the cells.

5. Battery pack according to claim 1, **characterized in that** said support frame (11) is made of plastic material, for example PTFE.
